Europäisches Patentamt

European Patent Office

Office européen des brevets

(19)

(11) Numéro de publication: **0 081 024**
**B1**

(12) **FASCICULE DE BREVET EUROPEEN**

(45) Date de publication du fascicule du brevet:
**19.02.86**

(21) Numéro de dépôt: **81401788.5**

(22) Date de dépôt: **12.11.81**

(51) Int. Cl.⁴: **A 01 B 71/06**, B 60 K 25/06,
B 60 K 17/28

(54) **Mécanisme d'entraînement sélectif de machines ou dispositifs à partir de l'arbre de prise de force d'un tracteur agricole.**

(43) Date de publication de la demande:
**15.06.83 Bulletin 83/24**

(45) Mention de la délivrance du brevet:
**19.02.86 Bulletin 86/8**

(84) Etats contractants désignés:
**AT BE CH DE FR GB LI NL**

(56) Documents cités:
**US - A - 1 583 256**
**US - A - 2 158 483**
**US - A - 2 195 909**
**US - A - 2 630 719**

(73) Titulaire: **DEERE & COMPANY, 1 John Deere Road,
Moline Illinois 61265 (US)**

(72) Inventeur: **Magin, Ludwig, Am Deutschhof 2 ÷ 4,
D-6707 Schifferstadt (DE)**

(74) Mandataire: **Pruvost, Marc Henri et al, Cabinet
ORES 6, Avenue de Messine, F-75008 Paris (FR)**

ACTORUM AG

## Description

La présente invention concerne un mécanisme pour l'entraînement sélectif de machines ou dispositifs à partir de l'arbre de prise de force d'un tracteur agricole.

Il est déjà connu, dans le machinisme agricole, notamment pour l'entraînement des organes mobiles d'une récolteuse-hacheuse-chargeuse ou d'une machine analogue, ce terme couvrant les ramasseuses-hacheuses, les ensileuses, etc., de prévoir un mécanisme de transmission comportant un arbre d'entrée entraîné à partir de l'arbre de prise de force du tracteur et deux arbres de sortie, dont l'un est relié par une transmission appropriée à ces organes mobiles de la récolteuse-hacheuse-chargeuse, qui est le plus souvent attelée latéralement au tracteur, tandis que l'autre peut être relié à un dispositif quelconque, tel qu'un dispositif équipant une remorque pouvant être attelée au tracteur. Un tel mécanisme comprend alors simplement un jeu de pignons coniques fournissant la répartition cinématique désirée.

Mais dans certains pays les réglementations en vigueur interdisent l'entraînement simultané d'une récolteuse-hacheuse-chargeuse et d'un dispositif équipant une remorque attelée au même tracteur que la récolteuse-hacheuse-chargeuse.

En vue d'une adaptation à ces réglementations spécifiques, on a en conséquence prévu pour le mécanisme d'entraînement précité un seul arbre de sortie, assurant l'entraînement de la récolteuse-hacheuse-chargeuse, en renonçant à une possibilité d'entraînement du ou des dispositifs équipant la remorque, ou bien on a adapté sur le mécanisme existant un capotage fixe coiffant le second arbre de sortie, qui peut être relié normalement à la remorque, en évitant dans ce second cas une modification plus profonde du système.

On comprendra toutefois que cette solution, qui consiste à renoncer à la possibilité d'entraîner un autre dispositif que la récolteuse-hacheuse-chargeuse elle-même à partir de l'arbre de force du tracteur, représente un inconvénient sur le plan du travail, étant donné qu'un autre groupe moteur doit être prévu si un dispositif équipant une remorque doit par exemple être entraîné.

On a déjà proposé de réaliser des mécanismes de transmission ou d'entraînement permettant l'entraînement sélectif de l'un ou l'autre de deux arbres de sortie à partir d'un même arbre moteur. Ainsi, dans le cas d'un mécanisme tel que décrit dans le brevet US 1 583 256, un arbre d'entrée peut assurer sélectivement l'entraînement de l'un ou l'autre de deux arbres disposés perpendiculairement l'un à l'autre, au moyen d'un manchon coulissant solidarisant sélectivement l'arbre d'entrée avec l'un ou l'autre de deux organes reliés aux arbres de sortie.

Des agencements pour l'entraînement selectif d'arbres de sortie orientée perpendiculairement l'un à l'autre sont également décrits dans les brevets US 2 158 483 et 2 195 909. Dans chaque cas, la sélection d'entraînement est assurée par le déplacement en translation d'un baladeur réalisant un enclenchement sélectif.

Une disposition des arbres de sortie du mécanisme de ce type général est utilisable notamment dans le cas d'une récolteuse-hacheuse-chargeuse attelée latéralement à un tracteur agricole, du fait que l'arbre de sortie du mécanisme destiné à l'entraînement de la récolteuse-hacheuse-chargeuse s'étend transversalement à la direction longitudinale du tracteur, donc perpendiculairement à l'arbre de prise de force de ce tracteur, tandis que le second arbre de sortie doit être dirigé vers une remorque par exemple attelée derrière le tracteur et s'étend en conséquence dans le prolongement de l'arbre d'entrée.

L'invention concerne un mécanisme de transmission du type général considéré mais de structure différente, fournissant un enclenchement sélectif de l'un ou l'autre de deux arbres de sortie perpendiculaires entre eux au moyen d'un organe de commande pivotant.

L'invention concerne en conséquence un mécanisme d'entraînement sélectif de machines ou dispositifs à partir de l'arbre de prise de force d'un tracteur agricole, comprenant un arbre d'entrée pouvant être relié à l'arbre de prise de force du tracteur et entraîné de façon permanente en rotation lors du travail, et deux arbres de sortie perpendiculaires entre eux, cet arbre d'entrée et ces arbres de sortie présentant des profilages pouvant être amenés directement ou indirectement en prise, un organe de commande étant déplaçable entre deux positions sélectives dans chacune desquelles une venue en prise directe ou indirecte est réalisée entre les profilages de l'arbre d'entrée et ceux de l'un des arbres de sortie, tandis que les profilages de l'autre arbre de sortie sont désaccouplés par rapport à ceux de l'arbre d'entrée, caractérisé en ce que l'arbre d'entrée, d'une part, et un arbre additionnel monté perpendiculaire à cet arbre d'entrée dans le carter du mécanisme et entraîné en permanence à partir de cet arbre d'entrée, d'autre part, sont constitués par des arbres creux et sont munis vers leur extrémité d'entraînement desdites cannelures ou profilages, en ce que les profilages des arbres de sortie sont analogues, ces arbres de sortie étant montés de façon à être déplaçables axialement, chacun respectivement vis-à-vis d'un arbre creux de manière à accoupler ou désaccoupler ces profilages, et en ce qu'il est prévu un organe de commande en forme de levier coudé, relié par ses bras à chacun de ces arbres de sortie déplaçables axialement, de sorte que le déplacement angulaire dans un sens de ce levier coudé déplace axialement ces arbres de sortie en sens opposés vis-à-vis des arbres creux pour provoquer la venue en prise et l'entraînement de l'un des arbres de sortie et le désaccouplement de l'autre arbre de sortie.

Suivant une particularité, l'un des arbres de sortie peut être monté de façon coulissante à l'intérieur de l'arbre entraîné en permanence à partir de l'arbre d'entrée par une partie de plus petit diamètre.

Suivant une autre particularité, la partie de l'arbre de sortie montée de façon coulissante dans l'arbre précité entraîné en permanence à partir de l'arbre d'entrée porte à son extrémité libre, située à l'intérieur du carter, un élément pour l'attaque de l'organe de commande en forme de levier coudé, afin d'assurer le déplacement en translation de cet arbre de sortie pour son accouplement ou son désaccouplement.

Suivant une autre particularité encore, un bout d'arbre intérieur est monté de façon coulissante à l'intérieur de l'arbre d'entrée, l'arbre de sortie conjugué étant immobilisé axialement sur ce bout d'arbre intérieur mais pouvant tourner par rapport à lui, des profilages d'accouplement étant prévus sur cet arbre de sortie et sur cet arbre d'entrée. L'arbre de sortie peut comporter un manchon immobilisé axialement sur le bout d'arbre et pouvant tourner par rapport à celui-ci, les profilages d'accouplement étant prévus sur ce manchon et sur l'arbre d'entrée.

Suivant l'invention, l'arbre d'entrée peut présenter dans sa périphérie des fentes pour le passage de doigts ou moyens analogues destinés à venir en prise avec l'organe de commande en forme de levier coudé.

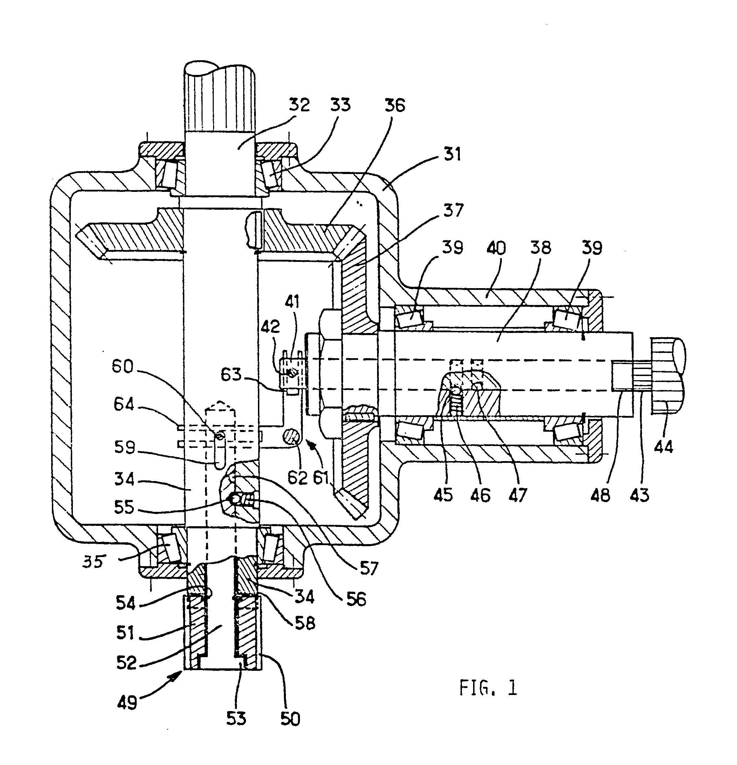

La description qui va suivre, faite en regard du dessin annexé, donné à titre non limitatif, permettra de mieux comprendre l'invention.

La figure unique est une représentation schématique en plan avec coupe d'un mode de réalisation du mécanisme suivant l'invention.

Le mécanisme représenté comprend un carter 31 dans lequel un arbre d'entrée 32 est tourillonné par un palier à roulement 33. Cet arbre d'entrée 32 est relié à l'arbre de prise de force d'un tracteur. Il traverse le carter 31 et son extrémité 34 en forme d'arbre creux est tourillonnée dans ce carter par un palier à roulement 35.

A l'intérieur du carter 31, l'arbre 32 porte un pignon conique 36 calé sur cet arbre et qui est en prise avec un autre pignon conique 37 calé sur un arbre creux 38 tourillonnée par un palier à roulement 39 dans un bossage 40 du carter 31. L'arbre 38 est orienté perpendiculairement à l'arbre 32. Il est destiné à l'entraînement de la récolteuse-hacheuse-chargeuse.

A cet effet, il est prévu à l'intérieur de l'arbre creux 38 un arbre coulissant 41 qui porte à son extrémité libre un doigt de commande 42 dont le rôle sera expliqué plus loin.

L'arbre 41 présente à l'opposé du doigt 42 une partie munie de cannelures longitudinales 43 qui rejoint un arbre de plus grand diamètre 44 formant l'arbre de sortie proprement dit du mécanisme.

La position longitudinale de l'arbre 41 dans l'arbre creux 38 est déterminée au moyen d'une bille de verrouillage 45 soumise à l'effet d'un ressort de compression 46, montée dans l'arbre creux 38 et pouvant s'engager dans l'un ou l'autre des deux logements 47 longitudinalement écartés, prévus dans l'arbre 41.

L'arbre creux 38 présente vers son extrémité orientée vers l'arbre 44 des cannelures intérieures 48.

Dans l'une des positions de l'arbre 41, qui est celle représentée sur le dessin, les cannelures 43 sont dégagées des cannelures 48, de sorte que dans cette position l'arbre creux 38, qui est entraîné à partir de l'arbre d'entrée 32 par le couple conique 36, 37, tourne fou par rapport à l'arbre de sortie 44, qui est libre.

Dans l'autre position, les cannelures 43 sont en prise avec les cannelures 48, de sorte que l'arbre 44 et ainsi la récolteuse-hacheuse-chargeuse sont entraînés.

Comme indiqué, l'arbre d'entrée 32 se termine par une partie formant un arbre creux 34. Le second arbre de sortie 49 du mécanisme, qui est destiné par exemple à l'entraînement d'un dispositif équipant une remorque attelée à la récolteuse-hacheuse-chargeuse, se présente sous la forme d'un arbre de prise de force, muni extérieurement de cannelures extérieures 50 avec lesquelles on peut amener en prise un arbre articulé (non représenté) relié à la remorque, d'une manière en soi classique.

Cet arbre de sortie 49 est constitué dans le cas présent par un manchon 51 qui est monté fou sur un bout d'arbre intérieur 52, sur lequel il est immobilisé axialement par un épaulement terminal 53 de cet arbre intérieur et par un jonc ou une bague fendue 54.

Le bout d'arbre intérieur 52 peut coulisser dans l'alésage de la partie creuse 34 de l'arbre 32 et il peut être immobilisé dans l'une ou l'autre de deux positions au moyen d'une bille 55 soumise à l'action d'un ressort de compression 56, montée dans l'arbre 32, 34 et pouvant s'engager sélectivement dans l'un ou l'autre de deux logements 57 écartée longitudinalement l'un de l'autre sur le bout d'arbre intérieur 52.

L'arbre creux 34 et le manchon 51 présentent sur leurs faces terminales en regard des dents ou crabots indiqués en 58, qui dans la position représentée sur le dessin sont en prise, mais qui sont dégagés l'un de l'autre comme décrit plus loin lors du déplacement axial du bout d'arbre intérieur 52 dans l'arbre creux 34.

Il est prévu dans l'arbre creux 34 deux fentes longitudinales 59 diamétralement opposées, dans lesquelles sont engagés des doigts 60 portés par le bout d'arbre intérieur 52 et faisant saillie à l'extérieur.

Pour assurer la commande, il est prévu un organe 61 constitué par un levier coudé en équerre, monté à pivotement autour d'un axe 62 perpendiculaire au plan contenant les axes des arbres 34 et 38. Ce levier présente des bras 63, 64 en forme de fourchettes, venant coopérer avec les doigts 42 et 60.

Le bras 64 est agencé de telle sorte, notamment en entourant l'arbre 34 du dessus et du dessous, que le doigt 60 demeure en prise avec lui pendant la rotation de cet arbre 34.

Le fonctionnement du mécanisme est le suivant:

Dans la condition représentée sur le dessin, les dents ou crabots 58 de l'arbre creux 34 et du manchon 51 formant l'arbre de sortie 49 sont en prise, de sorte qu'une liaison cinématique est établie entre l'arbre d'entrée 32 relié à l'arbre de prise de force du tracteur et l'arbre de sortie 49 relié par exemple à un dispositif équipant une remorque attelée à la récolteuse-hacheuse-chargeuse. L'ensemble formé par l'arbre d'entrée 32, avec sa partie creuse 34, le bout d'arbre intérieur 52 et le manchon 51 formant l'arbre de sortie 49 tourne donc, et un entraînement peut être assuré par exemple au moyen d'un arbre articulé adapté par son embout sur les cannelures extérieures 50 du manchon 51.

On voit par contre que, dans cette condition, les cannelures 43 sont dégagées des cannelures 48, de sorte que l'arbre creux 38 tourne autour de l'arbre 41 sans entraîner l'autre arbre de sortie 44, qui est relié à la récolteuse-hacheuse-chargeuse elle-même.

Si, à partir de la position représentée, en fait pivoter le levier coudé de commande 61 dans le sens antihoraire, le bout d'arbre intérieur 52 est repoussé par les doigts 60, qui coulissent dans les fentes 59 de l'arbre creux 34, tout en continuant de tourner. Ce bout d'arbre 52 déplace alors axialement le manchon 51 par le jonc 54, de sorte qu'il dégage les dents ou crabots initialement en prise 58 l'un de l'autre. Ainsi, le manchon 51 n'est plus entraîné en rotation et le bout d'arbre 52 tourne librement à l'intérieur de ce manchon. L'arbre de sortie 49 est donc désaccouplé.

Par contre, il résulte de ce déplacement du levier de commande 61, par l'intermédiaire de son bras 63 et du doigt 42, un déplacement vers la gauche en regardant le dessin de l'arbre de sortie 44, dont les cannelures 43 viennent alors en prise avec les cannelures intérieures 48 de l'arbre 38, de sorte que la récolteuse-hacheuse-chargeuse est entraînée.

On voit que cet entraînement est assuré de façon sélective et qu'on évite tout entraînement simultané, tout en conservant les possibilités d'entraînement de l'un ou l'autre des dispositifs ou engins attelés au tracteur.

## Revendications

1. Mécanisme d'entraînement sélectif de machines ou dispositifs à partir de l'arbre de prise de force d'un tracteur agricole, comprenant un arbre d'entrée (32) pouvant être relié à l'arbre de prise de force du tracteur et entraîné de façon permanente en rotation lors du travail, et deux arbres de sortie (44, 49) perpendiculaires entre eux, cet arbre d'entrée (32) et ces arbres de sorties (44, 49) présentant des profilages pouvant être amenés directement ou indirectement en prise, un organe de commande étant déplaçable entre deux positions sélectives dans chacune desquelles une venue en prise directe ou indirecte est réalisée entre les profilages de l'arbre d'entrée et ceux de l'un des arbres de sortie, tandis que les profilages de l'autre arbre de sortie sont désaccouplés par rapport à ceux de l'arbre d'entrée, caractérisé en ce que l'arbre d'entrée (32), d'une part, et un arbre additionnel (38) monté perpendiculaire à cet arbre d'entrée dans le carter (31) du mécanisme et entraîné en permanence à partir de l'arbre d'entrée (32), d'autre part, sont constitués par des arbres creux et sont munis vers leur extrémité d'entraînement desdites cannelures ou profilages (48, 58), en ce que les profilages (43, 58) des arbres de sortie (44, 49) sont analogues, ces arbres de sortie (44, 49) étant montés de façon à être déplaçables axialement chacun respectivement vis-à-vis d'un arbre creux de manière à accoupler ou désaccoupler ces profilages, et en ce qu'il est prévu un organe de commande (61) en forme de levier coudé, relié par ses bras (63, 64) à chacun de ces arbres de sortie déplaçables axialement (44, 52, 49), de sorte que le déplacement angulaire dans un sens de ce levier coudé déplace axialement ces arbres de sortie en sens opposés vis-à-vis des arbres creux pour provoquer la venue en prise et l'entraînement de l'un des arbres de sortie et le désaccouplement de l'autre arbre de sortie.

2. Mécanisme d'entraînement sélectif suivant la revendication 1, caractérisé en ce que l'un des arbres de sortie (44) est monté de façon coulissante à l'intérieur de l'arbre additionnel (38) entraîné en permanence à partir de l'arbre d'entrée (32) par une partie (41) de plus petit diamètre.

3. Mécanisme d'entraînement sélectif suivant la revendication 2, caractérisé en ce que la partie (41) de l'arbre additionnel (38) porte à son extrémité libre située à l'intérieur du carter (31) un élément (42) pour l'attaque de l'organe de commande (61) en forme de levier coudé, afin d'assurer le déplacement en translation de cet arbre de sortie (44) pour son accouplement ou son désaccouplement.

4. Mécanisme d'entraînement sélectif suivant l'une quelconque des revendications précédentes, caractérisé en ce qu'un bout d'arbre intérieur (52) est monté de façon coulissante à l'intérieur de l'arbre d'entrée (32), un arbre de sortie (49) étant immobilisé axialement sur ce bout d'arbre intérieur (52) mais pouvant tourner par rapport à lui, des profilages d'accouplement (58) étant prévus sur cet arbre de sortie et sur cet arbre d'entrée.

5. Mécanisme d'entraînement sélectif suivant la revendication 4, caractérisé en ce que l'arbre de sortie (49) comprend un manchon (51) immobilisé axialement sur le bout d'arbre (52) et pouvant tourner par rapport à celui-ci, les profilages d'accouplement étant prévus sur ce manchon et sur l'arbre d'entrée.

6. Mécanisme d'entraînement sélectif suivant la revendication 4 ou 5, caractérisé en ce que l'arbre d'entrée (32) présente dans sa périphérie des fentes (59) pour le passage de doigts (60) ou moyens analogues destinés à venir en prise avec l'organe de commande en forme de levier coudé (61).

## Patentansprüche

1. Mechanismus zum selektiven Antreiben von Maschinen oder Vorrichtungen von der Kraftabtriebswelle eines Ackerschleppers aus, der eine Eingangswelle (32), die mit der Kraftabtriebswelle des Ackerschleppers verbunden werden kann und während der Arbeit kontinuierlich in Drehrichtung angetrieben wird, und zwei zueinander senkrechte Ausgangswellen (44, 49) aufweist, wobei die Eingangswelle (32) und die Ausgangswellen (44, 49) Profile darbieten, welche direkt oder indirekt in Eingriff gebracht werden können, sowie ein Steuerorgan, das selektiv zwischen zwei Stellungen verstellbar ist, in denen jeweils ein direkter oder indirekter Eingriff zwischen den Porfilen der Eingangswelle und denen von einer der Ausgangswellen realisiert ist, während die Profile der anderen Ausgangswelle gegenüber denen der Eingangswelle ausser Eingriff sind, dadurch gekennzeichnet, dass die Eingangswelle (32) einerseits und eine zusätzliche Welle (38) andererseits, die senkrecht zu der Eingangswelle in dem Gehäuse (31) des Mechanismus montiert und dauernd von der Eingangswelle (32) angetrieben ist, durch Hohlwellen gebildet und an ihren Antriebsenden mit Nuten oder Profilen (48, 59) versehen sind, dass die Profile (43, 58) der Ausgangswellen (44, 49) analog ausgebildet sind, wobei die Ausgangswellen (44, 49) axial verschieblich montiert sind, und zwar jede gegenüber einer Hohlwelle in der Weise, dass sie die Profile ein- bzw. auskuppeln, und dass ein Steuerorgan (61) in Form eines Winkelhebels vorgesehen ist, der über seine Arme (63, 64) mit jeder der axial verschiebbaren Ausgangswellen (44, 52, 49) derart verbunden ist, dass eine Winkelverstellung des Winkelhebels in einer Richtung die Ausgangswellen in axialer Richtung und im entgegengesetzten Sinne gegenüber den Hohlwellen verschiebt, um einen Eingriff und Antrieb der einen Ausgangswelle und das Auskuppeln der anderen Ausgangswelle hervorzurufen.

2. Mechanismus zum selektiven Antreiben nach Anspruch 1, dadurch gekennzeichnet, dass eine der Ausgangswellen (44) verschieblich im Innern der zusätzlichen Welle (38), die dauernd von der Eingangswelle (32) angetrieben wird, mittels eines Abschnittes (41) von kleinerem Durchmesser montiert ist.

3. Mechanismus zum selektiven Antreiben nach Anspruch 2, dadurch gekennzeichnet, dass der Bereich (41) der Ausgangswelle (44), der verschieblich in der zusätzlichen Welle (38) montiert ist, an seinem freien Ende, das innerhalb des Gehäuses (31) gelegen ist, ein Element (42) zum Angreifen an dem Steuerorgan (61) in Form eines Winkelhebels trägt, um schliesslich die Translationsverstellung dieser Ausgangswelle (44) für ihr Kuppeln und Auskuppeln sicherzustellen.

4. Mechanismus zum selektiven Antreiben nach irgendeinem der voranstehenden Ansprüche, dadurch gekennzeichnet, dass ein Ende der inneren Welle (52) verschieblich im Inneren der Eingangswelle (32) montiert ist, wobei eine Ausgangswelle (49) in axialer Richtung unbeweglich auf diesem Ende der inneren Welle (52) festgelegt ist, jedoch gegenüber dieser drehbar angeordnet ist, und dass Kupplungsprofile (58) auf dieser Ausgangswelle und auf dieser Eingangswelle vorgesehen sind.

5. Mechanismus zum selektiven Antreiben nach Anspruch 4, dadurch gekennzeichnet, dass die Ausgangswelle (49) eine Buchse (51) umfasst, die auf dem Ende der Welle (52) axial unbeweglich angeordnet und gegenüber dieser drehbar ist, wobei Kupplungsprofile auf der Buchse und der Eingangswelle vorgesehen sind.

6. Mechanismus zum selektiven Antreiben nach Anspruch 4 oder 5, dadurch gekennzeichnet, dass die Eingangswelle (32) auf ihrem Umfang Schlitze (59) für den Durchgang von Fingern (60) oder analogen Mitteln darbietet, die dazu bestimmt sind, mit dem Steuerorgan in Form eines Winkelhebels (61) in Eingriff zu gelangen.

**Claims**

1. A mechanism for selectively driving machines or pieces of equipment from the power take-off shaft of an agricultural tractor, comprising an input shaft (32) which can be connected to the power take-pff shaft of the tractor and which is permanently driven in rotation when working and two mutually perpendicular output shafts (44, 49), said input shaft (32) and said output shafts (44, 49) having shaped configurations which can be directly or indirectly brought into engagement, a control member being displaceable between two selective positions, in each of which the shaped configurations of the input shaft and those of one of the output shafts are brought into direct or indirect engagement, while the shaped configurations of the other output shaft are uncoupled from those of the input shaft, characterised in that the input shaft (32) on the one hand and an additional shaft (38) mounted perpendicular to said input shaft in the casing (31) of the mechanism and driven permanently from the input shaft (32), on the other hand, are formed by hollow shafts and are provided towards their drive end with said shaped configurations or splines (48, 58), that the shaped configurations (48, 58) of the output shafts (44, 49) are similar, said output shafts (44, 49) being mounted in such a way as to be axially displaceable, each respectively with respect to a hollow shaft so as to couple or uncouple said shaped configurations, and that there is provided a control member (61) in the form of an elbow lever which is connectes by its arms (63, 64) to each of said axially displaceable output shafts (44, 52, 49) in such a way that angular displacement of said elbow lever in one direction axially displaces said output shafts in opposite directions with respect to the hollow shafts to cause engagement and drive of one of the output shafts and uncoupling of the other output shaft.

2. A selective drive mechanism according to claim 1 characterised in that one of the output shafts (44) is mounted slidably within the additional shaft (38) which is driven permanently from the input shaft (32) by a portion (41) of smaller diameter.

3. A selective drive mechanism according to claim 2 characterised in that the portion (41) of the output shaft (44) which is mounted slidably in the additional shaft (38) carries at its free end which is disposed within the casing (31), an element (42) for engaging the control member (61) in the form of the elbow lever in order to provide for translatory movement of said output shaft (44) for coupling or uncoupling thereof.

4. A selective drive mechanism according to any one of the preceding claims characterised in that an internal shaft portion (52) is mounted slidably within the input shaft (32), an output shaft (52) but being capable of rotating with respect thereto, shaped coupling configurations (58) being provided on said output shaft and on said input shaft.

5. A selective drive mechanism according to claim 4 characterised in that the output shaft (49) comprises a sleeve (51) which is axially immobilised on the shaft portion (52) and which is capable of rotating with respect thereto, the shaped coupling configurations being provided on said sleeve and on the input shaft.

6. A selective drive mechanism according to claim 4 or claim 5 characterised in that, in its periphery, the input shaft (32) has slots (59) for receiving fingers (60) or like means which are intended to come into engegement with the control member (61) in the form of the elbow lever.

1/1

FIG. 1